# EUROPÄISCHE PATENTSCHRIFT

(11) **EP 1 132 360 B1**
(45) Veröffentlichungstag und Bekanntmachung des Hinweises auf die Patenterteilung: **13.04.2005**
(21) Anmeldenummer: 01104836.0
(22) Anmeldetag: 28.02.2001
(51) Int. Cl.: C04B 37/02, B23P 11/00, F16B 4/00, F02C 7/264, F23C 5/02, B23P 11/02

(54) **Verfahren und Vorrichtung zur Fixierung einer keramischen Komponente in einem metallischen Support**
Method and device for fastening a ceramic element in a metallic support
Dispositif et procédé de fixation d' un élément céramique dans un support métallique

(30) Priorität: 06.03.2000 DE 10010923
(43) Veröffentlichungstag der Anmeldung: 12.09.2001
(73) Patentinhaber: ALSTOM Technology Ltd, 5400 Baden (CH)
(72) Erfinder: Stärk, Klaus Friedrich, Dr., 5417 Untersiggenthal (CH)

(56) Entgegenhaltungen:
- DE-A- 2 013 713
- DE-A- 4 301 927
- US-A- 4 312 599
- US-A- 4 874 674
- US-A- 4 991 991
- US-A- 5 174 660
- US-A- 5 496 646

## Beschreibung

### Technisches Gebiet

Die Erfindung betrifft ein Verfahren und eine Vorrichtung zur Fixierung einer keramischen Komponente in einem metallischen Support. Eine derartige keramische Komponente ist beispielsweise die keramische Isolationshülse für den Hochspannungs-Zündleiter, welcher in der Zündfackel einer Gasturbine angeordnet ist.

### Stand der Technik

Es ist bekannter Stand der Technik, Isolationshülsen aus Al₂O₃ mit Keramikklebern in den metallischen Support der Zündfackel einer Gasturbine einzukleben. Die Isolationshülsen isolieren den Hochspannungs-Zündleiter vom metallischen Support.

Damit eine gute Verbindung zwischen dem metallischen Support und den Isolationshülsen gewährleistet wird, muss eine Warmaushärtung des Klebers erfolgen.

Diese bekannte Art der Befestigung von keramischen Isolationshülsen in einem metallischen Support hat eine Reihe von Nachteilen. Einerseits ist der Keramikkleber sehr schlecht in den Zwischenraum zwischen der Isolationshülse und dem metallischen Support einzubringen. Zum Teil muss er mit einer Spritze in den Zwischenraum gespritzt werden, was schlecht zu handhaben ist. Der verwendete Keramikkleber verlangt einen sehr engen Spalt. Dies wirkt sich ungünstig auf die Montage aus. Andererseits schrumpft der Kleber beim Aushärten sehr stark (um ca. 20 bis 30 %), was zu einer Reduzierung des Klebstoffes führt, so dass die Hülse oftmals nur schlecht im metallischen Support eingeklebt ist und die Haftung ungenügend ist.

### Darstellung der Erfindung

Der Erfindung liegt die Aufgabe zugrunde, diese Nachteile des bekannten Standes der Technik zu beseitigen und ein Verfahren und eine Vorrichtung zur Fixierung einer keramischen Komponente in einem metallischen Support zu entwickeln, welche einfach zu handhaben ist, stets eine gute Haftung zwischen der keramischen Komponente und dem metallischen Support gewährleistet und billig sowie überall verfügbar ist.

Erfindungsgemäss wird dies bei einem Verfahren zur Fixierung einer keramischen Komponente in einem metallischen Support dadurch erreicht, dass in einem ersten Verfahrensschritt um die keramische Komponente herum eine Hülse, bestehend aus Grauguss mit Lamellengraphit, gelegt wird, in einem zweiten Verfahrensschritt die keramische Komponente einschliesslich der Hülse bei Temperaturen im Bereich von 500 bis 750 °C so lange geglüht werden, bis die Hülse eine Volumenzunahme infolge innerer Oxidation aufweist, durch welche die keramische Komponente bleibend eingeschrumpft wird und dass nach erfolgter Abkühlung die keramische Komponente mit der Hülse in den metallischen Support eingebracht und im Support gesichert werden.

Erfindungsgemäss wird dies bei einer Vorrichtung zur Fixierung einer keramischen Komponente in einem metallischen Support dadurch erreicht, dass die Vorrichtung aus einer aus Grauguss mit Lamellengraphit hergestellten Hülse besteht, welche an jenen Stellen der keramischen Komponente angeordnet ist, an denen die keramische Komponente im metallischen Support fixiert sein soll, wobei die keramische Komponente in die Hülse aufgrund innerer Oxidation des Graugusses mit Lamellengraphit eingeschrumpft ist. Die keramische Komponente ist beispielsweise eine Isolationshülse für einen Hochspannungs-Zündleiter, welcher in der Zündfackel einer Gasturbine angeordnet ist.

Die Vorteile der Erfindung bestehen darin, dass eine dauerhafte Verbindung durch eine einfache Glühoperation erzeugt werden kann ohne dass ein spezielles Montage know how notwendig ist. Da die Volumenzunahme des Graugusses nur dort auftritt, wo während des Glühvorganges Sauerstoff hinzutritt, bildet sich eine gleichmässige Flächenpressung zwischen der keramischen Komponente und der Hülse aus Grauguss. Es tritt vorteilhaft ein Selbstheilungseffekt auf, weil bei Temperaturen oberhalb von 500 °C die Oxidation wieder dort einsetzt, wo sich die Verbindung gelockert hat. Sie stoppt dort, wo kein Sauerstoff mehr hinkommt. Auf diese Weise wird eine sehr gute Haftung erzielt. Ein Vorteil der Erfindung besteht schliesslich auch darin, dass die Verbindung bei hoher Temperatur (ca. 700 bis 800 °C) zerstörungsfrei durch Auspressen wieder gelöst werden kann.

Es ist zweckmässig, wenn das Glühen der keramischen Komponente einschliesslich der Hülse aus Grauguss mit Lamellengraphit bei einer Temperatur von ca. 700 °C durchgeführt wird. Bei dieser Temperatur findet die innere Oxidation in einer vergleichsweise geringen Zeit statt, was sich günstig auf die Herstellungskosten auswirkt.

Es ist auch vorteilhaft, wenn die Hülse aus Grauguss mit Lamellengraphit im metallischen Support durch Körnerschläge am Support gesichert wird. Dies ist ein einfaches und schnelles Verfahren.

Weiterhin ist es von Vorteil, wenn als Material für die Hülse GG 20-25 verwendet wird, weil dieses Material überall verfügbar und vergleichsweise billig ist. Ausserdem sind die Graphitlamellen nach aussen hin offen, so dass auf diese Weise Sauerstoff in den Werkstoff gebracht wird, welcher die innere Oxidation und die damit verbundene Volumenzunahme überhaupt erst ermöglicht.

Schliesslich ist es zweckmässig, wenn als Material für die keramische Komponente Glaskeramik mit einem ähnlichen E-Modul und Wärmeausdehnungskoeffizienten wie die Hülse aus Grauguss mit Lamellengraphit verwendet wird, weil dadurch keine zusätzlichen Längsspannungen in der Keramik bei Temperaturänderungen erzeugt werden.

### Kurze Beschreibung der Zeichnung

In der Zeichnung ist ein Ausführungsbeispiel der Erfindung dargestellt.
Es zeigen:
- Fig. 1: einen Teillängsschnitt der Zündfackel einer Gasturbine;
- Fig. 2: einen Querschnitt durch die Glaskeramik- und Graugusshülse nach der Glühbehandlung;
- Fig. 3: ein Diagramm, in welchem die Abhängigkeit der Anpresskraft infolge innerer Oxidation von GG20 von der Glühdauer und Glühtemperatur dargestellt ist.

Es sind nur die für die Erfindung wesentlichen Elemente dargestellt und bezeichnet.

### Weg zur Ausführung der Erfindung

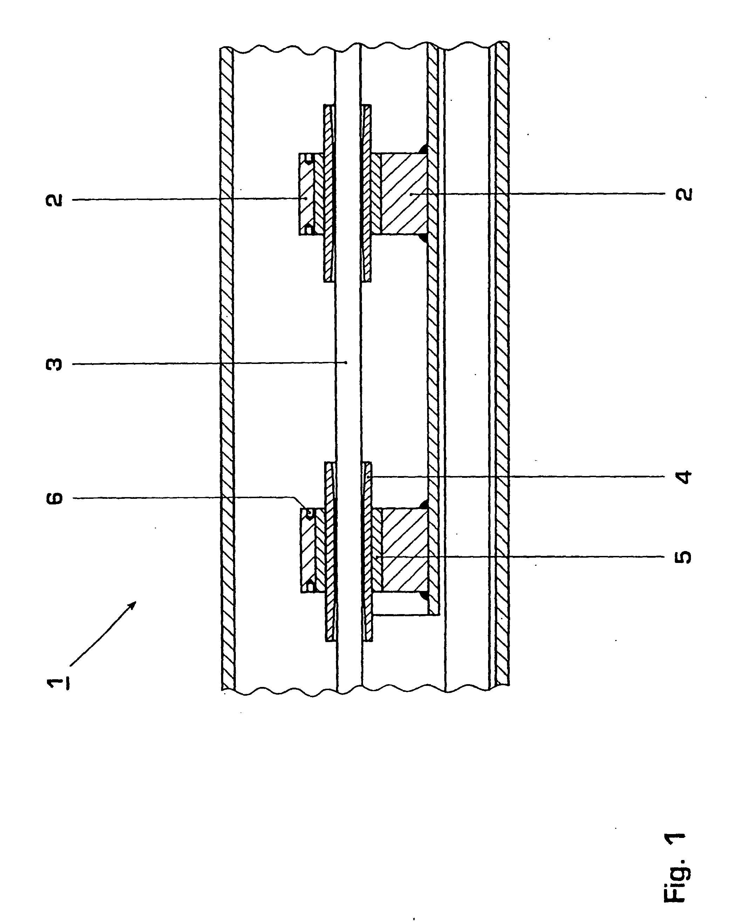

Nachfolgend wird die Erfindung anhand eines Ausführungsbeispieles und der Fig. 1 bis 3 näher erläutert.

In Fig. 1 ist ein Teillängsschnitt der Zündfackel 1 einer Gasturbine dargestellt. In einem metallischen Support 2, beispielsweise aus St S 18/8, ist ein Hochspannungs-Zündleiter 3 angeordnet. Dieser Hochspannungs-Zündleiter 3 ist mittels mehrerer keramischer Komponenten 4, die in axialer Richtung des Hochspannungs-Zündleiters 3 voneinander beabstandet um den Umfang des Hochspannungs-Zündleiters 3 angeordnet sind, vom metallischen Support 2 isoliert. In Fig. 1 sind beispielhaft zwei keramische Komponenten 4 abgebildet. Die Komponenten 4 sind in diesem Ausführungsbeispiel Isolationshülsen aus Glaskeramik. Glaskeramik ist durch Drehen gut bearbeitbar und weist einen ähnlichen E-Modul und Wärmeausdehnungskoeffizienten auf wie Grauguss. Um die Komponenten 4 sind an den Stellen, an denen sie im metallischen Support 2 fixiert sein sollen, Hülsen 5 aus Grauguss mit Lamellengraphit, hier GG 20, angeordnet. Die keramischen Komponenten 4 sind in den Hülsen 5 aufgrund innerer Oxidation des Graugusses mit Lamellengraphit verankert, d. h. die Keramik ist auf Druck befestigt.

Das erfindungsgemässe Verfahren ist dadurch gekennzeichnet, dass in einem ersten Verfahrensschritt um die keramische Komponente 4 herum die Hülse 5, bestehend aus Grauguss mit Lamellengraphit, vorzugsweise GG 20-25 (DIN 1691) gelegt wird, in einem zweiten Verfahrensschritt die keramische Komponente 4 einschliesslich der Hülse 5, d. h. als ein Teil, bei Temperaturen im Bereich von 500 bis 750 °C so lange geglüht werden, bis die Hülse 5 eine Volumenzunahme infolge innerer Oxidation aufweist, durch welche die keramische Komponente 4 bleibend fixiert wird und dass schliesslich nach erfolgter Abkühlung die keramische Komponente 4 mit der Hülse 5 in den metallischen Support 2 eingebracht und in einem letzten Verfahrensschritt im Support 2 gesichert werden. Diese Sicherung erfolgt vorzugsweise einfach mittels Körnerschläge am Support 2. Die Ansätze für die Sicherungskörner (Sackbohrungen zum Ansetzen des Körners beim Sichern gegen Herausrutschen) sind in Fig. 1 mit 6 bezeichnet.

Als bevorzugte Behandlungsparameter sind für die gemeinsame Glühung der keramischen Komponente 4 und der Graugusshülse 5 ca. 700 bis 750°C und 2 Tage (24 Stunden) anzugeben. Bei diesen Behandlungstemperaturen findet die innere Oxidation in einer vergleichsweise geringen Zeit statt, was sich günstig auf die Herstellungskosten auswirkt.

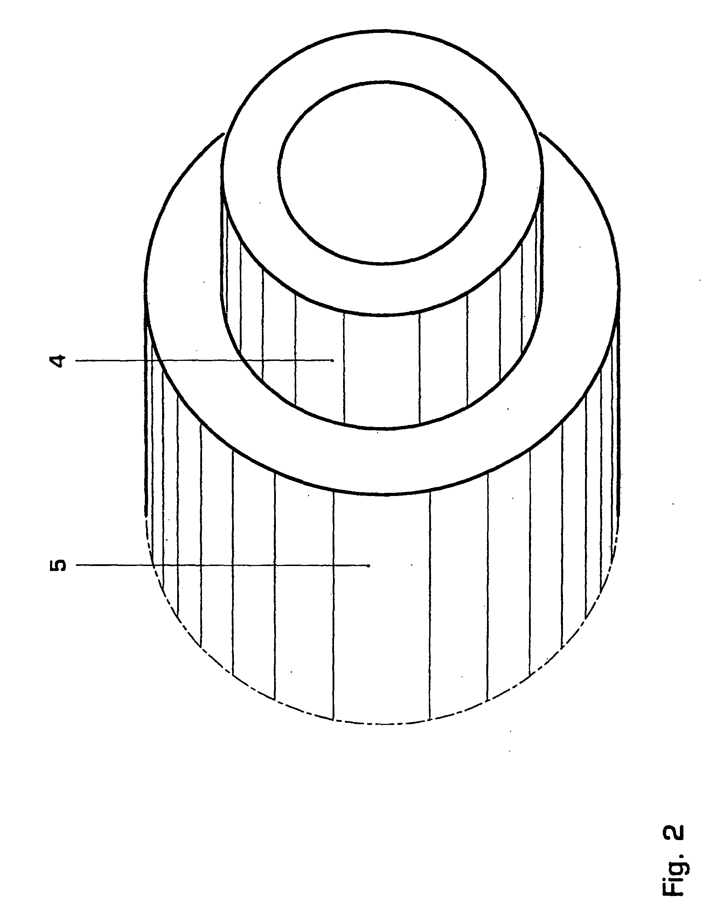

Fig. 2 zeigt einen Querschnitt durch die Glaskeramik- und Graugusshülse nach der Glühbehandlung. Die keramische Komponente 4 ist mit der Hülse 5 aus GG 20 fest verbunden und somit auf Druck durch Reibungskräfte befestigt.

Die Vorteile der Erfindung bestehen darin, dass eine dauerhafte Verbindung von keramischer Komponente 4 und Hülse 5 durch eine einfache Glühoperation erzeugt werden kann ohne dass ein spezielles Montage know how notwendig ist. Da die Volumenzunahme des Graugusses mit Lamellengraphit nur dort auftritt, wo während des Glühvorganges Sauerstoff hinzutritt, bildet sich eine gleichmässige Flächenpressung zwischen der keramischen Komponente 4 und der Hülse 5 aus Grauguss. Es tritt vorteilhaft ein Selbstheilungseffekt auf, weil bei Temperaturen oberhalb von 500 °C die Oxidation wieder dort einsetzt, wo sich die Verbindung gelockert hat. Sie stoppt dort, wo kein Sauerstoff mehr hinkommt. Auf diese Weise wird eine sehr gute Haftung erzielt. Ein Vorteil der Erfindung besteht schliesslich auch darin, dass die Verbindung bei hoher Temperatur zerstörungsfrei durch Auspressen wieder gelöst werden kann. Ein weiterer Vorteil der Erfindung besteht darin, dass als Material für die Hülse GG 20 bis GG 25 verwendet werden kann. Dieser Werkstoff ist preiswert und steht überall problemlos zur Verfügung.

Ausserdem sind die Graphitlamellen nach aussen hin offen, so dass auf diese Weise Sauerstoff in den Werkstoff gebracht wird, welcher die innere Oxidation und die damit verbundene Volumenzunahme überhaupt erst ermöglicht. Bei Verwendung von Gusseisen mit Kugelgraphit anstelle von Gusseisen mit Lamellengraphit käme die Erfindung nicht zum Tragen, weil keine Sauerstoffaufnahme über ein grösseres Volumen und damit keine innere Oxidation erfolgen kann.

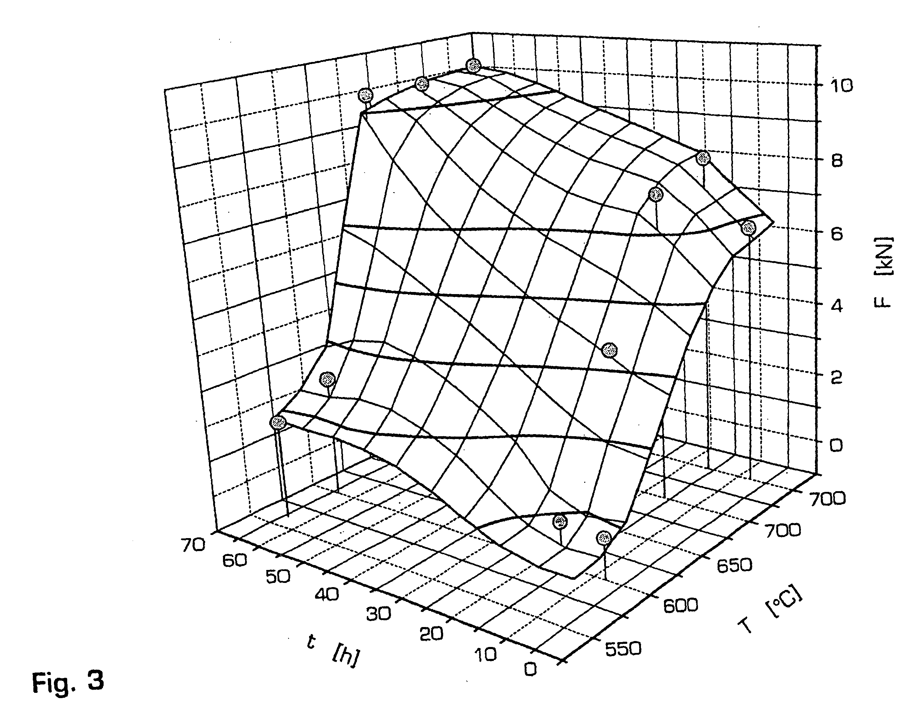

Fig. 3 zeigt in einem Diagramm die Abhängigkeit der Kraft, welche notwendig ist, um die keramische Komponente 4 nach der Einoxidation - in Abhängigkeit von Glühdauer und Glühtemperatur - aus der Hülse 5 aus GG 20 herauszupressen. Die Anpresskraft nimmt mit steigender Glühdauer (10-60 Stunden) und steigender Glühtemperatur (550-750 °C) zu.

Selbstverständlich ist die Erfindung nicht auf das beschriebene Ausführungsbeispiel beschränkt.

### Bezugszeichenliste

- 1: Zündfackel
- 2: Metallischer Support
- 3: Hochspannungs-Zündleiter
- 4: Keramische Komponente, z. B. Isolationshülse
- 5: Hülse aus Grauguss mit Lamellengraphit
- 6: Ansatz für Sicherungskörner
- t: Glühdauer
- T: Glühtemperatur
- F: Anpresskraft

## Patentansprüche

1. Verfahren zur Fixierung einer keramischen Komponente (4) in einem metallischen Support (2), **dadurch gekennzeichnet, dass**
a) in einem ersten Verfahrensschritt um die keramische Komponente (4) herum eine Hülse (5), bestehend aus Grauguss mit Lamellengraphit, gelegt wird,
b) in einem zweiten Verfahrensschritt die keramische Komponente (4) einschliesslich der Hülse (5) bei Temperaturen im Bereich von 500 bis 750 °C so lange geglüht werden, bis die Hülse (5) eine Volumenzunahme infolge innerer Oxidation aufweist, durch welche die keramische Komponente (4) bleibend fixiert wird und
c) nach erfolgter Abkühlung die keramische Komponente (4) mit der Hülse (5) in den metallischen Support (2) eingebracht und im Support (2) gesichert werden.

2. Verfahren nach Anspruch 1, **dadurch gekennzeichnet, dass** das Glühen der keramischen Komponente (4) einschliesslich der Hülse (5) aus Grauguss mit Lamellengraphit bei einer Temperatur von ca. 700 bis 750 °C durchgeführt wird.

3. Verfahren nach Anspruch 1, **dadurch gekennzeichnet, dass** die Hülse (5) aus Grauguss mit Lamellengraphit im metallischen Support (2) durch Körnerschläge am Support (2) gesichert wird.

4. Verfahren nach Anspruch 1, **dadurch gekennzeichnet, dass** als Material für die Hülse (5) GG 20-25 verwendet wird.

5. Verfahren nach Anspruch 1, **dadurch gekennzeichnet, dass** als Material für die keramische Komponente (4) Glaskeramik mit einem ähnlichen E-Modul und Wärmeausdehnungskoeffizienten wie die Hülse (5) aus Grauguss mit Lamellengraphit verwendet wird.

6. Vorrichtung zur Fixierung einer keramischen Komponente (4) in einem metallischen Support (2), **dadurch gekennzeichnet, dass** die Vorrichtung aus einer aus Grauguss mit Lamellengraphit hergestellten Hülse (5) besteht, welche an jenen Stellen der keramischen Komponente (4) angeordnet ist, an denen die keramische Komponente (4) im metallischen Support (4) fixiert sein soll, wobei die keramische Komponente (4) mit der Hülse (5) aufgrund innerer Oxidation des Graugusses mit Lamellengraphit fest verankert ist.

7. Vorrichtung nach Anspruch 6, **dadurch gekennzeichnet, dass** die keramische Komponente (4) eine Isolationshülse für einen Hochspannungs-Zündleiter (3) ist.

## Claims

1. Method for the fixing of a ceramic component (4) in a metallic support (2) **characterized in that**
a) in a first method step, a bush (5), consisting of grey cast iron with lamellar graphite, is placed around the ceramic component (4),
b) in a second method step, the ceramic component (4) including the bush (5) are annealed at temperatures in the range from 500 to 750°C until the bush (5) has an increase in volume as a result of internal oxidation causing the ceramic component (4) to be permanently fixed and
c) after cooling down, the ceramic component (4) with the bush (5) are introduced into the metallic support (2) and secured in the support (2).

2. Method according to Claim 1, **characterized in that** the annealing of the ceramic component (4) including the bush (5) made of grey cast iron with lamellar graphite is carried out at a temperature of approximately 700 to 750°C.

3. Method according to Claim 1, **characterized in that** the bush (5) made of grey cast iron with lamellar graphite is secured in the metallic support (2) by centre punch marks on the support (2).

4. Method according to Claim 1, **characterized in that** GG 20-25 is used as the material for the bush (5).

5. Method according to Claim 1, **characterized in that** glass ceramic with a similar modulus of elasticity and coefficient of thermal expansion as the bush (5) made of grey cast iron with lamellar graphite is used as the material for the ceramic component (4).

6. Device for the fixing of a ceramic component (4) in a metallic support (2), **characterized in that** the device comprises a bush (5) which is produced from grey cast iron with lamellar graphite and is arranged at those locations of the ceramic component (4) at which the ceramic component (4) is to be fixed in the metallic support (4), the ceramic component (4) being firmly anchored with the bush (5) on account of internal oxidation of the grey cast iron with lamellar graphite.

7. Device according to Claim 6, **characterized in that** the ceramic component (4) is an insulating bush for a high-voltage ignition conductor (3).

## Revendications

1. Procédé de fixation d'un composant céramique (4) dans un support métallique (2), **caractérisé en ce que** :
a) dans une première étape du procédé, on place une gaine (5) en fonte grise à graphite lamellaire autour du composant céramique (4),
b) dans une deuxième étape du procédé, on fait revenir le composant céramique (4) et la gaine (5) à des températures comprises entre 500 et 750°C jusqu'à ce que, suite à l'oxydation interne, la gaine (5) subisse une augmentation de volume par laquelle le composant céramique (4) est durablement fixé,
c) après que le refroidissement a eu lieu, on installe le composant céramique (4) et la gaine (5) dans le support métallique (2) et on les fixe dans le support (2).

2. Procédé selon la revendication 1, **caractérisé en ce que** l'on fait subir au composant céramique (4) et la gaine (5) en fonte grise à graphite lamellaire un revenu à une température comprise entre environ 700 et 750°C.

3. Procédé selon la revendication 1, **caractérisé en ce que** la gaine (5) en fonte grise à graphite lamellaire est fixée dans le support métallique (2) à l'aide de coups de pointeau appliqués sur le support (2).

4. Procédé selon la revendication 1, **caractérisé en ce que** l'on utilise de la fonte GG 20-25 comme matériau pour la gaine (5).

5. Procédé selon la revendication 1, **caractérisé en ce que**, comme matériau pour le composant céramique (4), on utilise une vitrocéramique dont le module d'élasticité et le coefficient de dilatation thermique sont similaires à ceux de la gaine (5) en fonte grise à graphite lamellaire.

6. Dispositif de fixation d'un composant céramique (4) dans un support métallique (2), **caractérisé en ce que** le dispositif est constitué d'une gaine (5) réalisée en fonte grise à graphite lamellaire qui est agencée à l'emplacement du composant céramique (4) sur lequel le composant céramique (4) doit être fixé dans le support métallique (4), le composant céramique (4) étant fixé à l'aide de la gaine (5) grâce à l'oxydation interne de la fonte grise à graphite lamellaire.

7. Dispositif selon la revendication 6, **caractérisé en ce que** le composant céramique (4) est une gaine d'isolation pour un conducteur d'allumage à haute tension (3).
